# FASCICULE DE BREVET EUROPEEN

(11) **EP 1 847 445 B1**
(45) Date de publication et mention de la délivrance du brevet: **15.07.2009**
(21) Numéro de dépôt: 07300952.4
(22) Date de dépôt: 16.04.2007
(51) Int. Cl.: B62D 21/15, B62D 25/08, B62D 29/00

(54) **Structure avant de véhicule automobile et un procédé correspondant**
Struktur vor einem Kraftfahrzeug und ein entsprechendes Verfahren
Front structure of automobile and corresponding method

(30) Priorité: 21.04.2006 FR 0651421
(43) Date de publication de la demande: 24.10.2007
(73) Titulaire: RENAULT S.A.S., 92100 Boulogne Billancourt (FR)
(72) Inventeur: Delord, Christian, 93320 Pavillon sous Bois (FR)

(56) Documents cités:
- EP-A1- 0 291 385
- EP-A1- 0 825 094
- DE-A1- 3 522 447
- JP-A- 58 188 760
- US-A- 4 509 790

## Description

La présente invention concerne le domaine des structures avant de véhicule automobile et en particulier un longeron avant et un procédé de fabrication d'un tel longeron.

Dans le document JP 2001-1310755, une structure est proposée qui comporte deux longerons s'étendant sensiblement longitudinalement vers l'avant du véhicule et formant une voie haute d'absorption d'efforts, l'extrémité avant de ces longerons étant reliée par l'intermédiaire d'une pendeloque à un berceau cadre disposé en dessous de longerons et formant une voie basse d'absorption d'efforts. La voie basse porte des éléments fonctionnels du véhicule pour le groupe moto-propulseur. Cette voie basse permet d'atténuer les vibrations provenant du roulement du véhicule sur la chaussée et provenant du moteur supporté, grâce au fait que le berceau est en partie « découplé » de la caisse.

Ce type de structure en combinaison avec des traverses de choc s'étendant devant les longerons et/ou la voie basse d'absorption d'efforts, vise à repartir au mieux l'énergie développée lors d'un choc frontal afin de protéger les passagers du véhicule.

Un des inconvénients réside dans le fait que les efforts de la voie basse d'absorption sont transmis à la voie haute d'absorption d'efforts par l'intermédiaire de fixation à vis. Ce moyen de fixation ne permet pas d'obtenir une bonne rigidité de la structure avant en cas de choc frontal car ces moyens sont fortement sollicités et peuvent se déplacer. En effet, il en résulte une concentration des contraintes dans cette région.

Le document JP 58188760 (D1) divulgue un longeron avant à trois branches: une première branche, une deuxième branche alignée à la même hauteur que la première branche, et une troisième branche s'étendant vers une autre hauteur.

Il est un objet de la présente invention de fournir une structure avant de véhicule automobile améliorée, en particulier un longeron amélioré.

Dans ce but, l'invention propose une structure avant de véhicule automobile du type comportant :
- un longeron à trois branches dont une première est adaptée à être montée, au moins sur une partie de sa longueur, sous le plancher dudit véhicule et ledit longeron s'étendant sensiblement longitudinalement vers l'avant selon l'axe longitudinal dudit véhicule,
- une deuxième branche s'étendant vers l'avant, étant sensiblement alignée avec l'axe de la première branche et disposée à la même hauteur que la première branche,
- une troisième branche se divisant du longeron au niveau d'une zone de jonction entre la première et la deuxième branche, ladite troisième branche comprenant deux sous-parties :
   i. une première sous-partie passant ladite branche à une autre hauteur et étant incliné vers l'avant,
   ii. une deuxième sous-partie disposée à ladite autre hauteur et s'étendant sensiblement dans le même plan vertical que les première et deuxième branches,
caractérisée en ce que ledit longeron comporte une première pièce et une deuxième pièce en tôle s'étendant selon la longueur dudit longeron et comprenant chacune un côté de chacune desdites trois branches et leur zone de jonction.

Un des avantages de la présente invention est que les efforts lors d'un choc frontal sont mieux distribués dans la structure avant. Dans les modes de réalisation, il est formé un longeron tel que sa déformation soit prévisible et avec un risque réduit de séparation de l'une ou plusieurs branches en comparaison avec un agencement où des branches sont séparées et fixées à un longeron. Le passage des efforts vers la première branche et le plancher lors d'un choc frontal est plus aisé à travers un matériau continu entre les trois branches.

Les deux pièces pourraient être fixées selon l'axe longitudinal sur toute ou partie significative de la longueur des trois branches, et aussi de préférence au niveau de la jonction.

Une zone des dites pièce en tôle formant la jonction entre la deuxième et la troisième branche peut être incurvée pour abaisser la contrainte dans la jonction entre la deuxième et la troisième branche.

La première pièce en tôle peut être pliée sur au moins une partie de la longueur de son bord libre pour former un canal avec la deuxième pièce en tôle et peut dépasser cette dernière, la deuxième pièce en tôle étant pliée vers l'extérieur dudit canal sur au moins une partie de la longueur de son bord libre pour former entre les deux pièces en tôle une bande de raccordement susceptible d'être soudée, par exemple, par soudage à point appliqué de l'extérieur dudit canal.

La troisième branche de la première pièce en tôle peut être pliée sur au moins une partie de la longueur de son bord orienté desdites première et deuxième sous-parties vers la zone libre entre les deuxième et troisième branches et sur au moins une partie de la longueur de l'autre bord de la deuxième sous-partie, les bords libres orientés vers la deuxième pièce en tôle étant pliés vers l'extérieur du canal pour former entre les deux pièces en tôle des bandes de raccordement susceptibles d'être soudées, par exemple, par soudage à point appliqué de l'extérieur dudit canal.

La deuxième branche de la deuxième pièce en tôle peut être pliée sur au moins une partie de la longueur de son bord libre pour former une section fermée avec la première pièce en tôle, ce bord libre de la deuxième pièce en tôle étant pliée vers l'extérieur de ladite section fermée pour former entre les deux pièces en tôle une bande de raccordement susceptible d'être soudée, par exemple, par soudage à point appliqué de l'extérieur dudit canal.

La première pièce en tôle peut former une coquille dont les branches présentent une section en canal ouvert dans le plan vertical et orienté vers la deuxième pièce en tôle.

La deuxième pièce en tôle peut être une feuille plane de fermeture dudit canal.

La première pièce en tôle peut comporter des bandes de raccordement orientées vers l'extérieur sur le pourtour des deuxième et troisième branches, y compris la jonction entre les deux et aussi sur l'autre bord de la deuxième sous-partie de la troisième branche, ladite deuxième pièce en tôle restant plane sur les bords correspondants pour former entre les deux pièces en tôle, des bandes inférieure et supérieure de raccordement susceptibles d'être soudées, par exemple, par soudage à point appliqué de l'extérieur de ladite section fermée.

Le bord libre de la première pièce en tôle et l'autre bord de la première branche et la première sous-partie de la troisième branche peut dépasser le bord libre de la deuxième pièce en tôle pour former ladite section fermée avec la deuxième pièce en tôle, cette dernière étant pliée vers l'extérieur de ladite section fermée sur au moins une partie de la longueur des bords correspondants pour former entre les deux pièces en tôle des bandes inférieure et supérieure de raccordement susceptibles d'être soudées, par exemple, par soudage à point appliqué de l'extérieur de ladite section fermée.

L'invention propose également un procédé de fabrication d'un longeron pour une structure avant de véhicule automobile comportant les étapes suivantes :
- fourniture d'une première pièce en tôle emboutie comportant trois branches sensiblement dans le même plan,
- fourniture d'une deuxième pièce en tôle emboutie sensiblement complémentaire à la première pièce en tôle, avec pliage des bords d'au moins une des pièces pour former des bandes de raccordement sur les trois branches et sur une jonction entre les trois branches,
- fixation sur une partie significative de la longueur des deux pièces en tôle, l'une contre l'autre au niveau des trois branches, par exemple, par soudage à point.

D'autres caractéristiques et avantages de l'invention apparaîtront à la lecture de la description détaillée, seulement à titre exemplaire, dans laquelle on se reportera aux dessins annexés dans lesquels :
- la figure 1 est une vue en perspective de deux pièces dissociées selon un premier mode de réalisation d'un longeron selon l'invention ;
- la figure 2 est une vue en perspective de deux pièces de la figure 1 assemblées selon le premier mode de réalisation du longeron selon l'invention ;
- la figure 3A est une section transversale selon la ligne B-B d'une première branche du longeron de la figure 2 ;
- la figure 3B est une section transversale selon la ligne A-A d'une deuxième branche du longeron de la figure 2 ;
- la figure 3C est une section transversale selon la ligne A-A d'une troisième branche du longeron de la figure 2 ;
- la figure 4 est une vue en perspective de deux pièces dissociées selon un deuxième mode de réalisation d'un longeron selon l'invention ;
- la figure 5 est une vue en perspective de deux pièces de la figure 4 assemblées selon le deuxième mode de réalisation du longeron selon l'invention ;
- la figure 6A est une section transversale selon la ligne B-B d'une première branche du longeron de la figure 5 ;
- la figure 6B est une section transversale selon la ligne A-A d'une deuxième branche du longeron de la figure 5 ; et
- la figure 6C est une section transversale selon la ligne A-A d'une troisième branche du longeron de la figure 5.

Dans la description qui va suivre, on adoptera à titre non limitatif une orientation longitudinale, verticale et transversale selon l'orientation traditionnellement utilisée dans l'automobile et indiquée par le trièdre L, V, T.

Par ailleurs, dans la description les pièces sont en tôle ce qui signifie que ce sont des feuilles de fer ou d'acier obtenue par laminage. Cependant, il convient de noter que ces pièces peuvent être réalisées avec d'autres matériaux tels que de l'aluminium ou un métal léger.

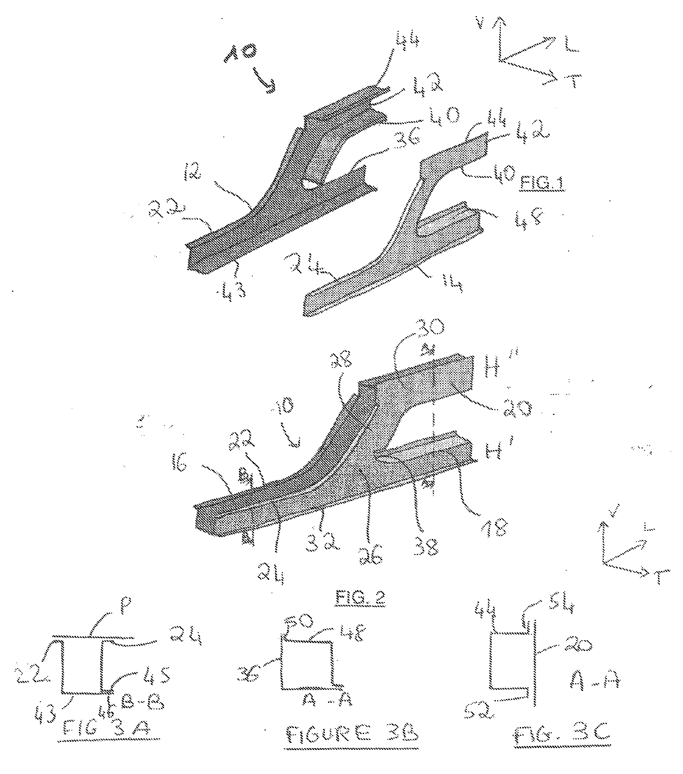

En référence aux figures, et en se focalisant pour le moment au premier mode de réalisation illustré aux figures 1 à 3C, une structure avant pour un véhicule automobile est décrite sous la forme d'un longeron 10. Le longeron 10 est apte à être monté sur une partie de sa longueur sous le plancher P d'une carrosserie de véhicule. Il s'étend sensiblement longitudinalement selon l'axe longitudinal du véhicule et il est prévu d'absorber l'énergie provoquée par des chocs frontaux et ce à deux hauteurs différentes de la carrosserie. Normalement, on peut envisager un longeron 10 par côté du compartiment se trouvant en avant du tablier.

En référence à la figure 1 , le longeron 10 selon la présente invention est formé d'une première pièce gauche 12 et une deuxième pièce droite 14 séparées, toute deux longitudinales et réalisées en tôle, par exemple, par emboutissage. Elles peuvent être réalisées dans tout matériau apte à former un longeron de véhicule automobile.

Les figures 2 à 3C illustrent les deux pièces 12, 14 après assemblage en longeron 10 qui comporte une première 16, une deuxième 18 et une troisième branche 20.

La première branche 16 est la partie du longeron se trouvant sous le plancher P à une hauteur H', sensiblement égale à la hauteur du plancher et présente une section en forme de U ouverte sur les bords supérieurs 22, 24. Chaque bord 22, 24 est replié vers l'extérieur pour présenter une bande de raccordement apte à se solidariser sur la longueur de la première branche 16 au plancher P de la carrosserie, par exemple par soudage par point.

La deuxième branche 18 s'étend vers l'avant du véhicule, et est sensiblement alignée avec l'axe de la première branche 16. Elle est disposée à la même hauteur que cette dernière.

La troisième branche 20 se divise du longeron 10 au niveau d'une zone de jonction 26 entre la première 16 et la deuxième branche 18. Elle comprend deux sous-parties :
- une première sous-partie 28 passant la branche 20 à une autre hauteur H" et étant inclinée vers l'avant, et
- une deuxième sous-partie 30 disposée à l'autre hauteur H" et s'étendant sensiblement dans le même plan vertical que les première 16 et deuxième 18 branches. Cette autre hauteur H" est, par exemple, la hauteur adaptée au pare-choc avant.

La troisième branche 20 se trouve au dessus de la deuxième branche 18 et l'espace entre ces deux branches 20, 18 forme une zone libre.

Les deux pièces 12, 14 comportent des faces extérieures planes. Elles sont embouties à partir d'une tôle plane et les faces extérieures de la première 16 et deuxième 18 branche sont droites et continues, ce qui forme un bord libre inférieur 32 continu.

Le bord libre supérieur 22 de la première branche 16 et le bord libre supérieur 36 de la deuxième branche 18 sont droits l'un par rapport à l'autre. La zone de jonction 26 interrompt les bords libres supérieurs 22, 36. C'est au niveau de cette interruption des bords libres supérieurs 22, 36 que se divise la troisième branche 20. Grâce à la continuité des matériaux constituant les deux pièces 12, 14 dans la longueur du longeron 10 et au fait qu'il présente une ramification constituée par la troisième branche 20, le longeron 10 présente une allure générale de Y.

Avec l'inclinaison vers l'avant de la première sous-partie 28 de la troisième branche 20, il existe un angle aigu entre cette troisième branche 20 et la deuxième branche 18. Entre ces deux branches 18, 20, la tôle dans le plan vertical de la jonction 26 présente une zone incurvée 38.

Le bord libre inférieur 40 de sa première et deuxième sous-parties 28, 30 est replié perpendiculairement à la surface principale de la première pièce 12 à partir de la jonction 26 jusqu'au bord avant 42. Le bord libre supérieur 44 de la première pièce 12 est replié perpendiculairement à la surface principale de la première pièce 12 sur toute la longueur de la deuxième sous-partie 30 de manière à ce que ces deux parties repliées soient parallèles et donc de facon à former un canal de section en forme de U. La deuxième sous-partie 30 est fermée entre ses bords supérieurs 44 et inférieurs 40 pour constituer une section fermée en forme de quadrilatère lorsque les deux pièces 12 et 14 sont solidarisée ensemble.

Comme l'illustre la figure 1 , le longeron 10 est formé de deux pièces 12, 14 séparées embouties. La première pièce en tôle 12 constitue le côté gauche du longeron 10. La première 16 et deuxième branche 18 de cette pièce 12 présente une forme de « L » réalisée par le pliage de la tôle à partir du bord libre inférieur continu 43 vers l'intérieur du longeron 10. La partie inférieure du « L » sépare les deux pièces 12, 14 pour constituer le fond d'un canal et dépasse la deuxième pièce 14 pour former une bande de raccordement 46 avec cette deuxième pièce 14. Cette dernière présente un bord inférieur libre 45 replié vers l'extérieur pour se fixer sur la bande de raccordement 46, ceci est représenté sur la figure 3A.

La deuxième branche 18 de la deuxième pièce 14 est pliée sur la longueur de son bord supérieur 48 vers l'intérieur du longeron 10 de manière à constituer une section fermée en forme de quadrilatère. Le bord supérieur 48 est ensuite replié verticalement pour former une bande de raccordement 50 avec le bord supérieur 36 de la deuxième branche 18 de la première pièce 12. Grâce à cette bande de raccordement 50 les deux pièces 12 et 14 peuvent s'assembler par exemple, par un soudage par point en référence à la figure 3B.

La troisième branche 20 de la première pièce 12 est pliée au niveau de son bord inférieur 40 à partir de la partie incurvée 38 de la zone de jonction 26 sur sa longueur et sur la longueur de la deuxième sous-partie 30. Les bords libres de ce pliage sont ensuite repliés vers le bas du longeron 10 pour former une bande de raccordement 52 avec le bord inférieur 40 de la troisième branche 20 de la deuxième pièce 14. Grâce à cette bande de raccordement 52 les deux pièces 12 et 14 peuvent s'assembler par exemple, par un soudage par point en référence à la figure 3C.

Le bord libre supérieur 44 de la deuxième sous-partie 30 de la troisième branche 20 de la deuxième pièce 12 est plié sur la longueur de son bord supérieur 44 vers l'intérieur du longeron 10. Puis il est replié verticalement pour constituer une bande de raccordement 54 destinée à être soudée avec le bord libre supérieur 44 de la troisième branche 20 de la deuxième pièce 14 de manière à constituer une section fermé en forme de quadrilatère, en référence à la figure 3C.

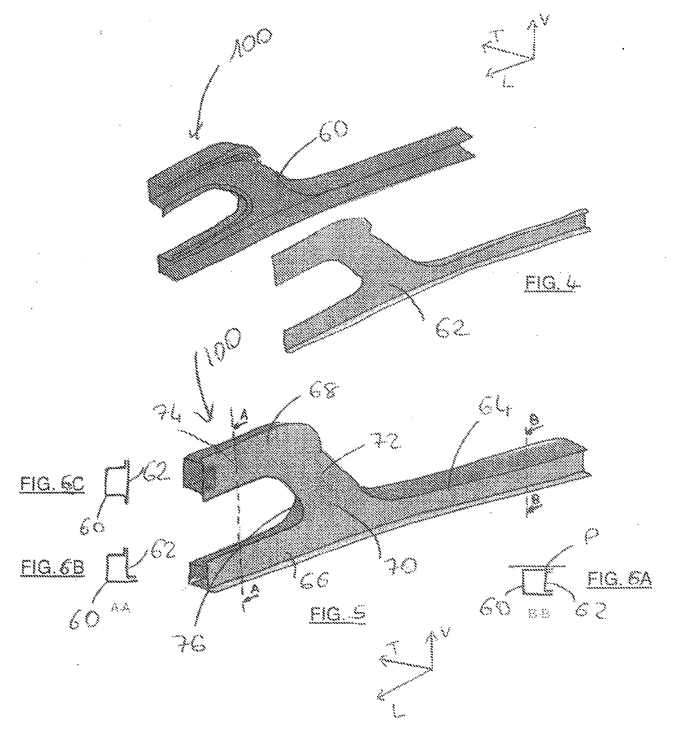

En se focalisant maintenant sur le deuxième mode de réalisation illustré aux figures 4 à 6C, la différence avec le premier mode de réalisation réside dans le fait que les deux côtés du longeron 100 sont formés par une partie dite « droite » en forme de coquille 60 et une partie dite « gauche » en forme de feuille plane 62. Toutes deux 60, 62 comportent une première 64, une deuxième 66 et troisième 68 branches de même allure que celles 12, 14 du longeron 10 selon le premier mode de réalisation.

La troisième branche 68 se divise du longeron 100 au niveau d'une zone de jonction 70 entre la première 64 et la deuxième branche 66. Elle comprend deux sous-parties :
- une première sous-partie 72 passant la branche 68 à une autre hauteur H" et étant inclinée vers l'avant, et
- une deuxième sous-partie 74 disposée à l'autre hauteur H" et s'étendant sensiblement dans le même plan vertical que les première 64 et deuxième 66 branches. Cette autre hauteur H" est, par exemple, l'hauteur adaptée au pare-choc avant.

La troisième branche 68 se trouve au dessus de la deuxième branche 66 et l'espace entre ces deux branches 66, 68 forme une zone libre.

La coquille 60 qui est une première pièce en tôle présente une section en canal ouvert dans le plan vertical et orienté vers la feuille 62 qui est une deuxième pièce en tôle. La coquille 60 comporte des bandes de raccordement orientées vers l'extérieur sur le pourtour des deuxième 66 et troisième 68 branches, y compris sur la jonction 70 entre les deux 66, 68 et aussi sur l'autre bord de la deuxième sous-partie 74 de la troisième branche 68, ladite deuxième pièce 62 en tôle restant plane sur les bords correspondants pour former entre les deux pièces en tôle 60, 62, des bandes inférieure et supérieure de raccordement susceptibles d'être soudées, par exemple, par soudage à point appliqué de l'extérieur de ladite section fermée. Cet agencement est visible en section pour la deuxième branche 66 en référence à la figure 6B et pour la troisième branche 68 en référence à la figure 6C.

De manière similaire au premier mode de réalisation, le canal défini par la première branche 64 et la deuxième branche 66 est continu. La zone de jonction 70 est formée par le départ d'un canal pour former la troisième branche 68 de manière similaire à la disposition de la première sous-partie 28 de la troisième branche 20 du premier mode de réalisation.

Le bord libre inférieur 76 qui s'étend sur toute la longueur de la coquille 60 et l'autre bord de sa première branche 64 et la première sous-partie 72 de la troisième branche 68 dépasse le bord libre de la feuille 62 pour former une section fermée avec la feuille 62. Cette dernière est pliée vers l'extérieur de ladite section fermée sur une partie de la longueur des bords correspondants pour former entre les deux pièces 60, 62, des bandes inférieure et supérieure de raccordement susceptibles d'être soudées, par exemple, par soudage à point appliqué de l'extérieur de ladite section fermée, en référence à la figure 6A.

Par ailleurs, avec l'inclinaison vers l'avant de la première sous-partie 72 de la troisième branche 68, il existe un angle aigu entre cette troisième branche 68 et la deuxième branche 66. Entre ces deux branches 66, 68, la tôle dans le plan vertical de la jonction 70 présente une zone incurvée 76.

Pour l'un ou l'autre mode de réalisation de l'invention, il n'est pas essentiel que le longeron comporte des branches de longueur identique, en effet, la longueur des branches peut varier en fonction du type de véhicule. De plus, les deux pièces en tôle peuvent être selon les contraintes imposées par chaque véhicule indifféremment disposés vers l'intérieur ou l'extérieur du véhicule.

La fixation entre les deux pièces du longeron pour chaque mode de réalisation peut être réalisée par soudage par point ou par un moyen équivalent tel que le collage. De cette façon, les deux pièces sont fixées selon l'axe longitudinal sur toute ou partie significative de la longueur et aussi de préférence, au niveau de la jonction. Les séparer en cas de choc frontal est ainsi plus difficile car les efforts des forces sont dans la même direction longitudinale, par exemple en comparaison avec des systèmes boulonnés où tous les moyens de fixation des branches peuvent être cisaillés.

Dans les modes de réalisation, il est formé un longeron tel que sa déformation soit prévisible et avec un risque réduit de séparation de l'une ou plusieurs branches en comparaison avec un agencement où des branches sont séparées et fixées à un longeron. Le passage des efforts vers la première branche et le plancher lors d'un choc frontal est plus aisé à travers un matériau continu entre les trois branches qu'à travers certains assemblages existants des branches, fait, par exemple, par vissage tel que proposé dans JP 2001-1310755.

La forme incurvée de la jonction, dans tous les modes de réalisation, entre la deuxième et la troisième branche évite significativement une concentration de contraintes, dues à un choc, entre les deux branches pour éviter qu'elles ne se séparent. Cet avantage se combine avec la continuité entre les branches pour la meilleure transmission des efforts lors d'un choc.

En ce qui concerne le premier mode de réalisation, il est clair que l'emboutissage pourrait être fait à partir de deux feuilles de tôle avec une fixation automatisée entre elles permettant d'obtenir une qualité reproductible et peu coûteuse. Leur forme permet d'utiliser un outil similaire pour les deux pièces.

La forme du longeron selon le deuxième mode de réalisation, c'est-à-dire fermé sur toute sa longueur, présente une rigidité encore supérieure au premier mode de réalisation. La feuille de fermeture est simple à emboutir et la fixation à la coquille pourrait être automatisée de manière encore plus simple qu'au premier mode de réalisation, c'est-à-dire sur un seul côté du longeron.

## Revendications

1. Structure avant de véhicule automobile du type comportant un longeron (10 ; 100) à trois branches, ledit longeron s'étendant sensiblement longitudinalement vers l'avant selon l'axe longitudinal dudit véhicule dont :
- une première branche (16 ; 64) est adaptée à être montée, au moins sur une partie de sa longueur, sous le plancher (P) dudit véhicule et,
- une deuxième branche (18 ; 66) s'étend vers l'avant, et est sensiblement alignée avec l'axe de la première branche et disposée à la même hauteur (H') que la première branche,
- une troisième branche (20 ; 68) se divise du longeron au niveau d'une zone de jonction (26 ; 70) entre la première et la deuxième branche, ladite troisième branche comprenant deux sous-parties :
i. une première sous-partie (28 ; 72) passant ladite branche à une autre hauteur (H") et étant incliné vers l'avant,
ii. une deuxième sous-partie (30 ; 74) disposée à ladite autre hauteur et s'étendant sensiblement dans le même plan vertical que les première et deuxième branches,
**caractérisée en ce que** ledit longeron (10 ; 100) comporte une première pièce (12 ; 60) et une deuxième pièce (14 ; 62) en tôle s'étendant selon la longueur dudit longeron et comprenant chacune un côté de chacune desdites trois branches (16, 18, 20 ; 64, 66, 68) et leur zone de jonction (26 ; 70).

2. Structure avant selon la revendication 1, **caractérisé en ce que** les deux pièces (12, 14 ; 60, 62) sont fixées selon l'axe longitudinal sur toute ou partie significative de la longueur des trois branches (16, 18, 20 ; 64, 66, 68), et aussi de préférence au niveau de la zone de jonction (26 ; 70).

3. Structure avant selon l'une des revendications précédentes, **caractérisée en ce qu'**une zone (38 ; 76) des dites pièces en tôle (12, 14 ; 60, 62) formant la zone de jonction (26 ; 70) entre la deuxième (18 ; 66) et la troisième branche (20 ; 68) est incurvée pour abaisser la contrainte dans la zone de jonction entre la deuxième et la troisième branche.

4. Structure avant selon l'une des revendications précédentes, **caractérisée en ce que** la première pièce en tôle (12) est pliée sur au moins une partie de la longueur de son bord libre (43) pour former un canal avec la deuxième pièce en tôle (14) et dépasse cette dernière, la deuxième pièce en tôle étant pliée vers l'extérieur dudit canal sur au moins une partie de la longueur de son bord libre pour former entre les deux pièces en tôle une bande de raccordement (46) susceptible d'être soudée, par exemple, par soudage à point appliqué de l'extérieur dudit canal.

5. Structure avant selon l'une des revendications précédentes, **caractérisée en ce que** la troisième branche (20) de la première pièce (12) en tôle est pliée sur au moins une partie de la longueur de son bord (40) orienté desdites première (28) et deuxième (30) sous-parties vers la zone libre entre les deuxième (18) et troisième (20) branches et sur au moins une partie de la longueur de l'autre bord (44) de la deuxième sous-partie, les bords libres orientés vers la deuxième pièce (14) en tôle étant pliés vers l'extérieur du canal pour former entre les deux pièces en tôle (12, 14) des bandes de raccordement (52, 54) susceptibles d'être soudées, par exemple, par soudage à point appliqué de l'extérieur dudit canal.

6. Structure avant selon l'une des revendications 3 ou 4, **caractérisée en ce que** la deuxième branche (18) de la deuxième pièce en tôle (14) est pliée sur au moins une partie de la longueur de son bord libre (36) pour former une section fermée avec la première pièce en tôle (12), ce bord libre de la deuxième pièce en tôle étant pliée vers l'extérieur de ladite section fermée pour former entre les deux pièces en tôle (12, 14) une bande de raccordement (50) susceptible d'être soudée, par exemple, par soudage à point appliqué de l'extérieur dudit canal.

7. Structure avant selon l'une des revendications 1 à 3, **caractérisée en ce que** la première pièce en tôle (60) forme une coquille dont les branches (64, 66, 68) présentent une section en canal ouvert dans le plan vertical et orienté vers la deuxième pièce en tôle (62).

8. Structure avant selon la revendication 7, **caractérisée en ce que** la deuxième pièce en tôle (62) est une feuille plane de fermeture dudit canal.

9. Structure avant selon l'une des revendications 7 ou 8, **caractérisée en ce que** la première pièce en tôle (60) comporte des bandes de raccordement orientées vers l'extérieur sur le pourtour des deuxième (66) et troisième (68) branches, y compris la zone de jonction (70) entre les deux et aussi sur l'autre bord de la deuxième sous-partie (74) de la troisième branche, ladite deuxième pièce en tôle (62) restant plane sur les bords correspondants pour former entre les deux pièces en tôle, des bandes inférieure et supérieure de raccordement susceptibles d'être soudées, par exemple, par soudage à point appliqué de l'extérieur de ladite section fermée.

10. Structure selon l'une des revendications 7 ou 8, **caractérisée en ce que** le bord libre de la première pièce en tôle (60) et l'autre bord de la première branche (64) et la première sous-partie (72) de la troisième branche (68) dépasse le bord libre de la deuxième pièce en tôle (62) pour former ladite section fermée avec la deuxième pièce en tôle, cette dernière étant pliée vers l'extérieur de ladite section fermée sur au moins une partie de la longueur des bords correspondants pour former entre les deux pièces en tôle dés bandes inférieure et supérieure de raccordement susceptibles d'être soudées, par exemple, par soudage à point appliqué de l'extérieur de ladite section fermée.

11. Procédé de fabrication d'un longeron pour une structure avant de véhicule automobile comportant les étapes suivantes :
- fourniture d'une première pièce en tôle (12 ; 60) emboutie comportant trois branches (16, 18, 20 ; 64, 66, 68) sensiblement dans le même plan,
- fourniture d'une deuxième pièce en tôle (14 ; 62) emboutie sensiblement complémentaire à la première pièce en tôle, avec pliage des bords d'au moins une des pièces (12, 14 ; 60, 62) pour former des bandes de raccordement sur les trois branches et sur une zone de jonction (26 ; 70) entre les trois branches,
- fixation sur une partie significative de la longueur des deux pièces en tôle, l'une contre l'autre au niveau des trois branches, par exemple, par soudage à point.

## Claims

1. Motor vehicle front structure of the type comprising a side rail (10; 100) having three branches, the said side rail extending substantially longitudinally towards the front along the longitudinal axis of the said vehicle, wherein:
- a first branch (16; 64) is designed to be mounted, at least over part of its length, below the floor pan (P) of the said vehicle,
- a second branch (18; 66) extends towards the front, and is substantially aligned with the axis of the first branch and arranged at the same height (H') as the first branch, and
- a third branch (20; 68) forks off from the side rail at a junction region (26; 70) between the first and the second branch, the said third branch comprising two sub-portions:
i. a first sub-portion (28; 72) which raises the said branch to another height (H") and which is inclined towards the front,
ii. a second sub-portion (30; 74) arranged at the said other height and extending substantially in the same vertical plane as the first and second branches,
**characterized in that** the said side rail (10; 100) comprises a first part (12; 60) and a second part (14; 62) made of sheet metal which extend along the length of the said side rail and which each comprise one side of each of the said three branches (16, 18, 20; 64, 66, 68) and their junction region (26; 70).

2. Front structure according to Claim 1, **characterized in that** the two parts (12, 14; 60, 62) are fastened along the longitudinal axis over all or a significant part of the length of the three branches (16, 18, 20; 64, 66, 68), and also preferably at the junction region (26; 70).

3. Front structure according to either of the preceding claims, **characterized in that** a region (38; 76) of the said sheet metal parts (12, 14; 60, 62) forming the junction region (26; 70) between the second branch (18; 66) and the third branch (20; 68) is curved in order to lower the stress in the junction region between the second and the third branch.

4. Front structure according to one of the preceding claims, **characterized in that** the first sheet metal part (12) is folded over at least part of the length of its free edge (43) in order to form a channel with the second sheet metal part (14) and projects beyond the latter, the second sheet metal part being folded towards the outside of the said channel over at least part of the length of its free edge in order to form between the two sheet metal parts a connecting strip (46) capable of being welded, for example, by spot welding applied from the outside of the said channel.

5. Front structure according to one of the preceding claims, **characterized in that** the third branch (20) of the first sheet metal part (12) is folded over at least part of the length of its edge (40) oriented from the said first (28) and second (30) sub-portions towards the free region between the second (18) and third (20) branches and over at least part of the length of the other edge (44) of the second sub-portion, the free edges oriented towards the second sheet metal part (14) being folded towards the outside of the channel in order to form between the two sheet metal parts (12, 14) connecting strips (52, 54) capable of being welded, for example, by spot welding applied from the outside of the said channel.

6. Front structure according to either of Claims 3 and 4, **characterized in that** the second branch (18) of the second sheet metal part (14) is folded over at least part of the length of its free edge (36) in order to form a closed section with the first sheet metal part (12), this free edge of the second sheet metal part being folded towards the outside of the said closed section in order to form between the two sheet metal parts (12, 14) a connecting strip (50) capable of being welded, for example, by spot welding applied from the outside of the said channel.

7. Front structure according to one of Claims 1 to 3, **characterized in that** the first sheet metal part (60) forms a shell whose branches (64, 66, 68) have an open channel section in the vertical plane that is oriented towards the second sheet metal part (62).

8. Front structure according to Claim 7, **characterized in that** the second sheet metal part (62) is a flat sheet for closing off the said channel.

9. Front structure according to either of Claims 7 and 8, **characterized in that** the first sheet metal part (60) comprises connecting strips oriented towards the outside over the periphery of the second (66) and third (68) branches, including the junction region (70) between the two and also over the other edge of the second sub-portion (74) of the third branch, the said second sheet metal part (62) remaining flat over the corresponding edges in order to form between the two sheet metal parts lower and upper connecting strips capable of being welded, for example, by spot welding applied from the outside of the said closed section.

10. Structure according to either of Claims 7 and 8, **characterized in that** the free edge of the first sheet metal part (60) and the other edge of the first branch (64) and the first sub-portion (72) of the third branch (68) project beyond the free edge of the second sheet metal part (62) in order to form the said closed section with the second sheet metal part, the latter being folded towards the outside of the said closed section over at least part of the length of the corresponding edges in order to form between the two sheet metal parts lower and upper connecting strips capable of being welded, for example, by spot welding applied from the outside of the said closed section.

11. Method of manufacturing a side rail for a motor vehicle front structure, comprising the following steps:
- supplying a first stamped sheet metal part (12; 60) comprising three branches (16, 18, 20; 64, 66, 68) substantially in the same plane,
- supplying a second stamped sheet metal part (14; 62) which is substantially complementary to the first sheet metal part, with folding of the edges of at least one of the parts (12, 14; 60, 62) in order to form connecting strips on the three branches and on a junction region (26; 70) between the three branches,
- fastening the two sheet metal parts one against the other over a significant part of their length at the three branches, for example by spot welding.

## Patentansprüche

1. Vorderstruktur für ein Kraftfahrzeug jener Art, die einen Längsträger (10; 100) mit drei Armen aufweist, wobei sich der Längsträger im Wesentlichen in Längsrichtung entlang der Längsachse des Fahrzeugs nach vorne erstreckt, von denen:
- ein erster Arm (16; 64) dazu ausgeführt ist, mindestens über einen Teil seiner Länge unter dem Boden (P) des Fahrzeugs montiert zu werden, und
- sich ein zweiter Arm (18; 66) nach vorne erstreckt, auf die Achse des ersten Arms im Wesentlichen ausgerichtet ist und auf gleicher Höhe (H') wie der erste Arm angeordnet ist,
- ein dritter Arm (20; 68) an einer Verbindungszone (26; 70) zwischen dem ersten und dem zweiten Arm vom Längsträger abzweigt, wobei der dritte Arm zwei Unter-Teile aufweist:
i. einen ersten Unter-Teil (28; 72), der den Arm auf einer anderen Höhe (H") passiert und nach vorne geneigt ist,
ii. einen zweiten Unter-Teil (30; 74); der auf der anderen Höhe angeordnet ist und sich im Wesentlichen in der gleichen Vertikalebene wie der erste und der zweite Arm erstreckt,
**dadurch gekennzeichnet, dass** der Längsträger (10; 100) ein erstes Teil (12; 60) und ein zweites Teil (14; 62) aus Bleich aufweist, die sich entlang der Länge des Längsträgers erstrecken und jeweils eine Seite jedes der drei Arme (16, 18, 20; 64, 66, 68) und ihre Verbindungszone (26; 70) umfassen.

2. Vorderstruktur nach Anspruch 1, **dadurch gekennzeichnet, dass** die beiden Teile (12, 14; 60, 62) entlang der Längsachse über die ganze oder einen bedeutenden Teil der Länge der drei Arme (16, 18, 20; 64, 66, 68) und des Weiteren vorzugsweise an der Verbindungszone (26; 70) befestigt sind.

3. Vorderstruktur nach einem der vorhergehenden Ansprüche, **dadurch gekennzeichnet, dass** eine Zone (38; 76) der Blechteile (12, 14; 60, 62), die die Verbindungszone (26; 70) zwischen dem zweiten (18; 66) und dem dritten Arm (20; 68) bildet, gekrümmt ist, um die Spannung in der Verbindungszone zwischen dem zweiten und dem dritten Arm zu verringern.

4. Vorderstruktur nach einem der vorhergehenden Ansprüche, **dadurch gekennzeichnet, dass** das erste Blechteil (12) über mindestens einen Teil der Länge seines freien Rands (43) gefalzt ist, um einen Kanal mit dem zweiten Blechteil (14) zu bilden, und über letzteres hinausragt, wobei das zweite Blechteil über mindestens einen Teil der Länge seines freien Rands zur Außenseite des Kanals gefalzt ist, um zwischen den beiden Blechteilen ein Verbindungsband (46) zu bilden, das zum Beispiel durch auf die Außenseite des Kanals angewandtes Punktschweißen verschweißt werden kann.

5. Vorderstruktur nach einem der vorhergehenden Ansprüche, **dadurch gekennzeichnet, dass** der dritte Arm (20) des ersten Blechteils (12) über mindestens einen Teil der Länge seines ausgerichteten Rands (40) des ersten (28) und des zweiten (30) Unter-Teils zu der freien Zone zwischen dem zweiten (18) und dem dritten (20) Arm und über mindestens einen Teil der Länge des anderen Rands (44) des zweiten Unter-Teils gefalzt ist, wobei die zu dem zweiten Blechteil (14) ausgerichteten freien Ränder zur Außenseite des Kanals gefalzt sind, um zwischen den beiden Blechteilen (12, 14) Verbindungsbänder (52, 54) zu bilden, die zum Beispiel durch an die Außenseite des Kanals angewandtes Punktschweißen verschweißt werden können.

6. Vorderstruktur nach einem der Ansprüche 3 oder 4, **dadurch gekennzeichnet, dass** der zweite Arm (18) des zweiten Blechteils (14) über mindestens einen Teil der Länge seines freien Rands (36) gefalzt ist, um mit dem ersten Blechteil (12) ein geschlossenes Profil zu bilden, wobei dieser freie Rand des zweiten Blechteils zur Außenseite des geschlossenen Profils gefalzt ist, um zwischen den beiden Blechteilen (12, 14) ein Verbindungsband (50) zu bilden, das zum Beispiel durch auf die Außenseite des Kanals angewandtes Punktschweißen verschweißt werden kann.

7. Vorderstruktur nach einem der Ansprüche 1 bis 3, **dadurch gekennzeichnet, dass** das erste Blechteil (60) eine Schale bildet, deren Arme (64, 66, 68) ein Profil in Form eines Kanals aufweisen, der in Vertikalebene offen ist und zu dem zweiten Blechteil (62) ausgerichtet ist.

8. Vorderstruktur nach Anspruch 7, **dadurch gekennzeichnet, dass** das zweite Blechteil (62) eine ebene Tafel zum Schließen des Kanals ist.

9. Struktur nach einem der Ansprüche 7 oder 8, **dadurch gekennzeichnet, dass** das erste Blechteil (60) zur Außenseite ausgerichtete Verbindungsbänder um den Umfang des zweiten (66) und des dritten (68) Arms aufweist, einschließlich der Verbindungszone (70) zwischen den beiden und auch auf dem anderen Rand des zweiten Unter-Teils (74) des dritten Arms, wobei das zweite Blechteil (62) eben auf den entsprechenden Rändern bleibt, um zwischen den beiden Blechteilen untere und obere Verbindungsbänder zu bilden, die zum Beispiel durch auf die Außenseite des geschlossenen Profils angewandtes Punktschweißen verschweißt werden können.

10. Struktur nach einem der Ansprüche 7 oder 8, **dadurch gekennzeichnet, dass** der freie Rand des ersten Blechteils (60) und der andere Rand des ersten Arms (64) sowie der erste Unter-Teil (72) des dritten Arms (68) über den freien Rand des zweiten Blechteils (62) hinausragen, um mit dem zweiten Blechteil das geschlossene Profil zu bilden, wobei dieses letztere über mindestens einen Teil der Länge der entsprechenden Ränder zur Außenseite des geschlossenen Profils gefalzt ist, um zwischen den beiden Blechteilen untere und obere Verbindungsbänder zu bilden, die zum Beispiel durch auf die Außenseite des geschlossenen Profils angewandtes Punktschweißen verschweißt werden können.

11. Verfahren zur Herstellung eines Längsträgers für eine Vorderstruktur eines Kraftfahrzeugs, das die folgenden Schritte umfasst:
- Bereitstellen eines tiefgezogenen ersten Blechteils (12; 60), das drei Arme (16, 18, 20; 64, 66, 68) umfasst, die im Wesentlichen in der gleichen Ebene liegen,
- Bereitstellen eines tiefgezogenen zweiten Blechteils (14; 62), das zu dem ersten Blechteil im Wesentlichen komplementär ist, mit Falzen der Ränder mindestens eines der Teile (12, 14; 60, 62) zur Bildung von Verbindungsbändern auf den drei Armen und auf einer Verbindungszone (26; 70) zwischen den drei Armen,
- Befestigen eines bedeutenden Teils der Länge der beiden Blechteile aneinander an den drei Armen, zum Beispiel durch Punktschweißen.
